# EUROPÄISCHE PATENTSCHRIFT

(11) **EP 0 682 815 B1**
(45) Veröffentlichungstag und Bekanntmachung des Hinweises auf die Patenterteilung: **28.05.1997**
(21) Anmeldenummer: 94904915.9
(22) Anmeldetag: 01.02.1994
(51) Int. Cl.: H01M 2/16

(54) **MIKROPORÖSES SEPARATORENMATERIAL FÜR ELEKTROCHEMISCHE ZELLEN, INSBESONDERE FÜR BLEI-SCHWEFELSÄURE-AKKUMULATOREN UND DAMIT HERGESTELLTE ZELLEN UND AKKUMULATOREN**
MICROPOROUS SEPARATOR MATERIAL FOR ELECTROCHEMICAL CELLS, IN PARTICULAR FOR LEAD/SULPHURIC ACID ACCUMULATORS, AND CELLS AND ACCUMULATORS MANUFACTURED THEREWITH
MATERIAU MICROPOREUX POUR SEPARATEURS DESTINES A DES ELEMENTS ELECTROCHIMIQUES, NOTAMMENT A DES ACCUMULATEURS AU PLOMB-ACIDE SULFURIQUE, ET ELEMENTS ET ACCUMULATEURS AINSI FABRIQUES

(30) Priorität: 02.02.1993 AT 175/93
(43) Veröffentlichungstag der Anmeldung: 22.11.1995
(73) Patentinhaber: JUNGFER Gesellschaft m.b.H. & Co. KG, A-9181 Feistritz (AT)
(72) Erfinder: DOVJAK, John Peter, A-9020 Klagenfurt (AT); RAPPOLD, Helmuth, A-1140 Wien (AT)
(74) Vertreter: Pfeifer, Otto, Dipl.-Ing.
(86) Internationale Anmeldenummer: AT9400011
(87) Internationale Veröffentlichungsnummer: WO9418710

(56) Entgegenhaltungen:
- EP-A- 0 265 136
- EP-A- 0 322 169
- EP-A- 0 425 784
- FR-A- 2 448 791

## Beschreibung

Bei der Fertigung von Blei-Schwefelsäureakkumulatoren, insbesondere bei der automatisierten Fertigung von Starterbatterien für Kraftfahrzeuge, verwendet man prinzipiell zwei Arten von Separatoren, nänlich Blattseparatoren und sogenannte Taschenseparatoren.

Aus technischen Gründen werden in zunehmendem Maße Taschenseparatoren verwendet. Während Blattseparatoren zum Zwecke der elektrischen Trennung von Batterieplatten verschiedener Polarität zwischen diesen angeordnet werden, werden bei Verwendung von Taschenseparatoren die Platten jeweils einer Polarität in Taschen aus einem geeigneten Separatorenmaterial gesteckt, während die Platten der entgegengesetzten Polarität frei bleiben. Durch diese Taschen wird also eine Akkumulatorenplatte auf der Vorder- und Rückseite sowie auf der Unter- und den beiden Seitenkanten umhüllt.

Zur Herstellung von Blattseparatoren verwendet man eine große Zahl verschiedenster Materialien; am verbreitesten sind mikroporöse Folien aus gesintertem PVC-Pulver.

Ein Separatorenmaterial aus PVC ist für die Herstellung von Separatorentaschen aber nur bedingt geeignet, seine Flexibilität ist begrenzt, obwohl hierfür eigens flexiblere PVC-Materialien entwickelt wurden. Auch können wegen des hohen Chlorgehalts von PVC-Separatoren Bleiakkumulatoren mit PVC-Scheidern nur in Sonderfällen durch Einschmelzen rezykliert werden.

Als vielversprechende Alternative, insbesondere zur Herstellung von Taschenseparatoren, werden in neuererer Zeit mikroporöse Folien aus extrudiertem Polyethylen angeboten.

Um auf Basis von Polyethylen mikroporöse Bahnen extrudieren zu können, müssen Kunstgriffe und aufwendige Technologien angewendet werden.

Eine Technologie zur Herstellung solcher extrudierter Polyethylenseparatoren wird in der US-Patentschrift 3,351,495 beschrieben. Eine typische Materialzusammensetzung eines entsprechend dieser Patentschrift hergestellten Separators wird mit 46,5 Vol.-% Polyolefin, 46,5 Vol-% Füller und 7 Vol.-% Weichmacher angegeben. Als bevorzugtes Polyolefin wird Polyethylen mit einem Molekulargewicht von mindestens 300.000 genannt; als Füller wird feinverteiltes Siliziumdioxid angeführt und als Weichmacher wird Petroleumöl spezifiziert.

Aus den weiteren US-Patentschriften 4,210,709 und 4,331,622 ist ferner bekannt, eine Mischung aus hochmolekularem Polyolefin mit einem mittleren Molekulargewicht von unter 600.000, anorganischem Füller und einem Weichmacher zu extrudieren. Als Polyolefine werden vorzugsweise hochmolekulares Polyethylen, aber auch Polypropylen und Copolymere der beiden genannt, als anorganischer Füller wird feinstverteiltes SiO₂ verwendet und als Weichmacher werden eine ganze Reihe von Stoffen angeführt, wie z.B. Kohlenwasserstofföle, fette Öle, Siliconöle usw.

Um eine Porenstruktur zu erhalten, wird in einem weiteren Arbeitsgang das Weichmacheröl mit einem geeigneten Lösungsmittel extrahiert. Die solcherweise hergestellten Folien sind für die Verwendung als Batterieseparatoren aber nicht ohne weiters geeignet, da sie eine zu geringe Oxidationsbeständigkeit aufweisen. Eine hohe Oxidationsbeständigkeit ist für Separatoren jedoch unerläßlich, weil das Separatorenmaterial in der Batterie mit der positiven, aktiven Akkumulatorenmasse in Kontakt steht, welche ein sehr hohes Potential aufweist.

Um dem extrudierten, mikroporösen Material die erforderliche Oxidationsbeständigkeit zu verleihen, werden in einem weiteren Arbeitsgang durch Tauchen, Besprühen oder Coaten zumindest an der Oberfläche wieder in einem geeigneten Lösungsmittel gelöste organische Substanzen zugeführt, vorzugsweise Weichmacher aus der Gruppe der Phthalate und Mellitate sowie spezielle Mineralöle.

In ähnlicher Weise wird nach der DE-OS-30 04 659 ein mikroporöser Batteriescheider hergestellt, wobei die extrudierte Masse aus Polyolefin, vorzugsweise Polyethylen oder anderen Polyolefinen oder Olefin-Copolymeren, silikatischem Füller und einem aromatenreichen Öl besteht. Zur Erzielung einer für die Verwendung als Separator in Batterien ausreichenden Oxidationsbeständigkeit muß bei der Extraktion ein Großteil des Öls im Separator verbleiben, oder es muß das völlig extrahierte Material wieder mit Öl behandelt werden, bis zu einem Endgehalt an Öl von 5 bis 25%. Nur so kann eine befriedigende Lebensdauer der Separatoren in der Batterie erzielt werden.

Die veröffentlichte britische Patentanmeldung 2 169 129 A beschreibt ein Verfahren zur Herstellung einer speziell für solche Materialien geeigneten, gefällten Kieselsäure.

Der in mikroporösen Separatoren, die nach bekannten Verfahren hergestellt werden, enthaltene Anteil an organischen Weichmachern oder an Ölen hat schwerwiegende technische Nachteile zur Folge. So können im Verlauf der Gebrauchsdauer einer Batterie aus dem Separatorenmaterial Weichmacher austreten, die im Kontakt mit der positiven Masse und/oder naszierendem Sauerstoff zu niedrigen flüchtigen organischen Säuren oxidiert werden, z.B. zu Essigsäure. Diese schädigt bekanntermaßen die Batterie und hat eine bedeutende Verkürzung ihrer Lebensdauer zur Folge.

Ölhaltige Separatoren geben bald nach Inbetriebnahme einer Batterie einen wesentlichen Anteil des in ihnen enthaltenen Öls ab; dieses schwimmt auf die Elektrolytoberfläche auf, wobei es eine große Menge loser, dunkelgefärbter Massepartikel mitnimmt. Durch die bei bestimmten Betriebsbedingungen einer Batterie auftretende Gasentwicklung kommt es zur Bildung von Aerosolen. Diese nehmen von der Elektrolytoberfläche Öl- und Schmutzteilchen mit und schlagen sie an der Innenseite des Gasraums der Batterie nieder, sodaß die Batterie, welche in der Regel ein transparentes Gehäuse besitzt, schon nach kurzer Zeit sehr unansehnlich wirkt. Die Schmutzbildung an der inneren Oberfläche einer Batterie kann ferner bis zur Verstopfung der feinen Entgasungsöffnungen und -kanäle führen, wodurch in der Batterie ein solcher Überdruck entstehen kann, daß diese dadurch zum Zerbersten gebracht wird.

In der DE-OS 39 28 468 wird zur Verringerung derartiger schädlicher Ablagerungen vorgeschlagen, an Stelle der bekannten Weichmacher solche Öle zu verwenden, die einen nur geringen aromatischen Anteil aufweisen und ihrem Wesen nach hauptsächlich naphthenisch sind und einen möglichst niedrigen polaren Anteil enthalten. Als Grundsubstanz wird ultrahochpolymeres Polyethylen mit einem mittleren Molekulargewicht von mindestens 1 000 000 bevorzugt.

Nach dem Extrudieren der aus Polyethylen, SiO₂ und Weichmacheröl bestehenden Grundmasse wird das Öl, wie in der DE-OS 30 04 659 beschrieben, zur Gewährleistung einer ausreichenden Oxidationsbeständigkeit nur teilweise aus dem geformten Blatt extrahiert oder aber nach vollständiger Extraktion wieder in einem eigenen Arbeitsgang auf das Blatt aufgebracht.

Nach dem Stande der Technik wird somit das Problme der Verhinderung der Bildung von Ablagerungen im Gasraum von Batterien nicht befriedigend gelöst, und die für die Batteriefertigung verwendeten Separatoren müssen zur Erzielung einer ausreichenden Oxidationsbeständigkeit stets über einen bestimmten Mindestgehalt an Weichmacherölen oder anderen Weichmachern verfügen .

Ein weiterer Nachteil ergibt sich ferner durch die verbreitete Verwendung von chlorierten Kohlenwasserstoffen als Extraktionsmittel für die Weichmacherkomponente bzw. als Lösungsmittel beim Wiederaufbringen der Schutzkomponente zur Erzielung einer ausreichenden Oxidationsbeständigkeit. Bei diesen Arbeitsgängen verbleibt entsprechend dem Gleichgewicht zwischen Öl bzw. Weichmacher und chloriertem Kohlenwasserstoff je nach endgültigem Gehalt des Separatorenmaterials an Öl bzw. Weichmacher eine mehr oder minder große, jedoch meßbare Menge an chloriertem Kohlenwasserstoff im Separator. Aus diesem chlorierten Kohlenwasserstoff, der beim Betrieb der Batterie zusammen mit dem Öl bzw. dem Weichmacher aus dem Separator freigesetzt wird, können unter Batteriebedingungen ausreichende Mengen an Chlor bzw. an Perchlorat-Ion entstehen, um die Batterielebensdauer entscheidend zu verkürzen.

Es stellte sich daher die Aufgabe, mikroporöse, flexible und oxidationsbeständige extrudierte Polyolefinseparatoren zur Verfügung zu stellen, welche nicht die Nachteile der Abgabe von batterieschädlichen Substanzen aus dem Separatorenmaterial aufweisen.

Erfindungsgemäß wird diese Aufgabe durch Verwendung eines bestimmten ultrahochmolekularen Polyethylens gelöst, wodurch es gelingt, einen öl- und weichmacherfreien Separator herzustellen, der die oben beschriebenen Nachteile nicht besitzt.

Gegenstand der Erfindung ist somit ein mikroporöser Batteriescheider, insbesondere für Blei-Schwefelsäure-Akkumulatoren, bestehend aus Polyolefin und Füller, dadurch gekennzeichnet, daß die Polyolefinkomponente ein mittleres Molekulargewicht von über 5.000.000 aufweist und daß im gebrauchsfertigen Separator der Anteil an extrahierbarem Öl unter 1 % liegt.

Vorzugsweise besteht die Polyolefinkomponente aus Polyethylen, insbesondere mit einer Viskositätszahl von über 2.500 und einer Grenzviskositätszahl von über 2.000.

Zur Herstellung des erfindungsgemäßen mikroporösen Batteriescheiders wird in einem ersten Arbeitsschritt eine Mischung aus diesem ultrahochmolekularen Polyethylen mit Zusatz eines Weichmachers, vorzugsweise eines paraffinisch-naphthenischen Mineralöls, und von hochoberflächenaktiver Kieselsäure und geringer Anteile an Extrudierhilfsstoffen und Stabilisatoren bereitet und zu einem profilierten Band extrudiert. In einem nachfolgenden Arbeitsgang wird die weichmachende organische Komponente aus dem profilierten Band zur Gänze durch erschöpfende Extraktion entfernt.

Zusätzlich zum Vorteil, ein Separatorenmaterial ohne die Möglichkeit des Freisetzens von batterieschädigenden Substanzen zu erhalten, tritt als weiterer Vorteil der Wegfall des zusätzlichen Arbeitsganges des Konditionierens des Separators mit einer Lösung einer organischen Substanz oder eines Öls auf.

In umfangreichen Versuchen wurde nämlich überraschenderweise festgestellt, daß der erfindungsgemäß unter Verwendung eines besonderen, ultra-hochmolekularen Polyethylens erhaltene Separator ohne weitere Behandlung, sowohl unter Bedingungen der Prüfung seiner Oxidationsbeständigkeit mittels Dichromatlösung und eines simulierten Batterie-Überladetests, als auch unter den Bedingungen, denen ein Akkumulator während des umfangreichen Verfahrens zur Ermittlung seiner Kapazitäts- und Kaltstarteigenschaften mit anschließender Zyklisierung zur Ermittlung der Batterielebensdauer unterworfen ist, zur Verwendung in Blei-Säure-Akkumulatoren in ausgezeichneter Weise geeignet ist.

### AUSFÜHRUNGSBEISPIEL

In einer Mischvorrichtung werden 10 Gewichtsteile eines Hochdruck-Polyethylens mit einem mittleren Molekulargewicht von 5,6 x 10⁶, einem Schmelzbereich von 130 - 133°C, einer Preßdichte von 0,93 g/cm³ und einer Grenzviskositätszahl von 2260, 30 Gewichtsteile feinverteilte Fällungskieselsäure mit einem Ölbindevermögen von 420 ml/100 g, einer BET-Oberfläche von 170 m²/g und einer Stampfdichte von 80 g/l und 60 Gewichtsteile eines naphthenreichen, paraffinischen Öls mit einem Paraffinanteil von 63% und einem Naphthenanteil von 32 %, einem Gehalt an gesättigten Verbindungen von 68 %, einer Dichte bei 15°C von 0,87 g/cm³, einer Viskosität bei 100°C von 4,4 mm²/s und einem Viskositätsindex von 98, gemischt. Hinzu kommen noch 0,02 Gewichtsteile eines Gleitmittels und 0,01 Gewichtsteile eines Stabilisators für die Kunststoffkomponente.

Diese vorgemischte Rohmasse wird in einem Doppelschneckenextruder plastifiziert und bei einer Temperatur von 170 bis 200°C durch eine Breitschlitzdüse zu einer profilierten Flachfolie extrudiert.

In einem weiteren Arbeitsgang wird der Ölanteil der extrudierten Rohfolie mit Trichlorethen oder einem anderen, geeigneten Lösungsmittel durch Extraktion entfernt. Anschließend wird das extrahierte Folienband durch Trocknen von Lösungsmittelresten befreit. Die Zusammensetzung des extrahierten und trockenen Folienbandes beträgt 25 Gew.-% Polyethylen und 75 Gew.-% Kieselsäure, bei einem Restölgehalt < 0,1 Gew.-%. Das profilierte Folienband wird im folgenden auf die gewünschte Breite geschnitten und ist für die weitere Verwendung zur Herstellung von Separatorentaschen oder Blattseparatoren fertig.

## Patentansprüche

1. Verfahren zur Herstellung eines mikroporösen Batteriescheiders, insbesondere für Blei-Schwefelsäure-Akkumulatoren, bestehend aus Polyolefin und Füller, dadurch gekennzeichnet, daß eine Mischung aus 5 bis 15 Gew.-% Polyethylen mit einem mittleren Molekulargewicht von über 5,000.000, 20 bis 40 Gew.-% anorganischem Füllstoff und 5 bis 75 Gew.-% Weichmacher extrudiert wird und der Weichmacher nach dem Extrudieren zum größten Teil oder zur Gänze durch Extrahieren entfernt wird.

2. Verfahren nach Anspruch 1, dadurch gekennzeichnet, daß das Polyethylen eine Viskositätszahl von über 2.500 und eine Grenzviskositätszahl von über 2.000 aufweist.

3. Verfahren nach Anspruch 1 oder 2, dadurch gekennzeichnet, daß als anorganischer Füllstoff gegenüber dem Zellenelektrolyt inerte Materialien verwendet werden, wie MgO, Al₂O₃, SiO₂, TiO₂ und dergleichen.

4. Verfahren nach Anspruch 3, dadurch gekennzeichnet, daß als Füllstoff eine gefällte Kieselsäure mit einer Ölzahl von 300 ml/100 g verwendet wird.

5. Verfahren nach einem der Ansprüche 1 bis 4, dadurch gekennzeichnet, daß als Weichmacher ein naphthenreiches, paraffinisches Öl mit einem Viskositätsindex von etwa 100 und einer Viskosität bei 100°C von etwa 4mm²/s verwendet wird.

6. Mikroporöser Batteriescheider, erhältlich nach dem Verfahren nach einem der Ansprüche 1 bis 5, dadurch gekennzeichnet, daß er einen Restölgehalt von <1,0 Gew.-%, vorzugsweise <0,1 Gew.-%, aufweist.

7. Elektrische Zellen und Akkumulatoren, die unter Verwendung von mikroporösen Scheidern, erhalten nach einem der Ansprüche 1 bis 5, hergestellt sind.

## Claims

1. Method of producing a microporous battery separator, in particular for lead-sulfuric acid storage batteries, comprising a polyolefin and a filler material, characterized in that a mixture composed of 5 to 15% by weight of polyethylene having an average molecular weight in excess of 5 000 000, 20 to 40% by weight of inorganic filler material and 5 to 75% by weight of plasticizer is extruded and the greater part or all of the plasticizer is removed by extraction after the extrusion process.

2. Method according to claim 1, characterized in that the polyethylene has a viscosity number in excess of 2500 and a limiting viscosity number in excess of 2000.

3. Method according to claim 1 or 2, characterized by using inert materials in respect of the electrolyte of the cells as inorganic filler material, e.g. MgO, Al₂O₃, SiO₂, TiO₂ and the like.

4. Method according to claim 3, characterized by using precipitated silica having an oil number of 300 mg/100 g as filler material.

5. Method according to any one of claims 1 to 4, characterized by using a paraffinic oil rich in naphthenes having an viscosity index of about 100 and a viscosity at 100°C of about 4 mm²/sec as plasticizer.

6. A microporous battery separator, obtainable by the method according to any one of claims 1 to 5, characterized by having a residual oil content of less than 1,0% by weight, preferably less than 0,1% by weight.

7. Electrical cells and storage batteries, which are produced by using microporous battery separators, obtained according to any one of claims 1 to 5.

## Revendications

1. Procédé pour la fabrication d'un séparateur de batterie microporeux, en particulier pour des accumulateurs au plomb-acide sulfurique, constitué par une polyoléfine et une matière de charge, caractérisé en ce que l'on extrude un mélange constitué par 5 à 15 % en poids de polyéthylène d'un poids moléculaire moyen supérieur à 5 000 000, 20 à 40 % en poids de matière de charge minérale et 5 à 75 % en poids d'un plastifiant et le plastifiant est éliminé en grande partie ou en totalité après l'extrusion par extraction.

2. Procédé selon la revendication 1, caractérisé en ce que le polyéthylène présente un indice de viscosité supérieur à 2500 et un indice de viscosité limite supérieur à 2 000.

3. Procédé selon la revendication 1 ou 2, caractérisé en ce qu'en tant que matière de charge minérale, on utilise des matières inertes vis-à-vis de l'électrolyte des cellules, telles que MgO, Al₂O₃, SiO₂, TiO₂.

4. Procédé selon la revendication 3, caractérisé en ce qu'en tant que matière de charge, on utilise un acide silicique précipité ayant une absorption d'huile de 300 ml/-100 g.

5. Procédé selon l'une des revendication 1 à 4, caractérisé en ce qu'en tant que plastifiant, on utilise une huile paraffinique riche en naphtène ayant un indice de viscosité d'environ 100 et une viscosité à 100°C d'environ 4 mm²/s.

6. Séparateur de batterie microporeux, obtenu selon le procédé de l'une quelconque des revendications 1 à 5, caractérisé en ce qu'il présente une teneur en huile résiduelle de < 1,0 % en poids, de préférence < 0,1 % en poids.

7. Accumulateurs et cellules électriques, qui sont fabriqués en utilisant des séparateurs microporeux obtenus selon l'une des revendications 1 à 5.
